# EUROPEAN PATENT APPLICATION

(11) **EP 3 508 952 A1**
(43) Date of publication of application: **10.07.2019**
(21) Application number: 19152682.1
(22) Date of filing: 02.10.2013
(51) Int. Cl.: G06F 3/01, G06F 3/041

(54) **SYSTEMS AND METHODS FOR PROVIDING MODE OR STATE AWARENESS WITH PROGRAMMABLE SURFACE TEXTURE**

(30) Priority: 20.11.2012 US 201261728665 P; 20.11.2012 US 201261728661 P; 20.11.2012 US 201261728727 P; 14.03.2013 US 201313830125
(62) Divisional of application: 13780438.1
(71) Applicant: Immersion Corporation, San Jose, CA 95134 (US)
(72) Inventor: LEVESQUE, Vincent, Montreal, Québec H2J 2R1 (CA); BIRNBAUM, David, Oakland, CA 94607 (US); CRUZ-HERNANDEZ, Juan Manuel, Montreal, Québec H3Z 1T1 (CA); WEDDLE, Amaya, San Jose, CA 95125 (US)
(74) Representative: Phillips & Leigh LLP

(57) **Abstract**

Systems and methods of mode or state awareness with programmable surface texture are disclosed. For example, in one embodiment, a system of the present disclosure may include a sensor configured to detect an interaction with a touch surface and transmit a sensor signal associated with the interaction; a processor in communication with the sensor, the processor configured to: determine a mode of operation; control at least one feature of a system based on the mode of operation and the interaction; determine a simulated texture associated with the mode of operation; output a haptic signal associated with the simulated texture; and a haptic output device in communication with the processor and coupled to the touch surface, the haptic output device configured to receive the haptic signal and simulate the texture on the touch surface based in part on the haptic signal.

## Description

### Cross-Reference to Related Applications

This Application claims priority to Provisional Application No. 61/728,665, filed on November 20, 2012, and entitled "Systems and Methods for Providing Mode or State Awareness with Programmable Surface Texture;" Provisional Application No. 61/728,661, filed on November 20, 2012, and entitled "System and Method for Feedforward and Feedback with Electrostatic Friction;" Provisional Application No. 61/728,727, filed on November 20, 2012, and entitled "System and Method for Simulated Physical Interactions with Electrostatic Friction;" and ;" Non-Provisional Application No. 13/830,125, filed on March 14, 2013, and entitled "Systems and Methods for Providing Mode or State Awareness with Programmable Surface Texture", the entirety of each of which is incorporated by reference herein.

### Background

Touch enabled devices have become increasingly popular. For instance, mobile and other devices may be configured with touch-sensitive displays so that a user can provide input by touching portions of the touch-sensitive display. As another example, a touch enabled surface separate from a display may be used for input, such as a trackpad, mouse, or other device. Furthermore, some touch enabled devices make use of haptic effects, for example, haptic effects configured to simulate a texture on a touch-surface. This type of haptic effect can be used to provide information to the user. Thus, there is a need for mode awareness with programmable surface texture.

### Summary

Embodiments of the present disclosure include devices featuring surface-based haptic effects that simulate one or more features in a touch area. Features may include, but are not limited to, changes in texture, changes in coefficient of friction, and/or simulation of boundaries, obstacles, or other discontinuities in the touch surface that can be perceived through use of an object in contact with the surface. Devices including surface-based haptic effects may be more user friendly and may provide a more compelling user experience.

In one embodiment, a system of the present disclosure may comprise a sensor configured to detect an interaction with a touch surface and transmit a sensor signal associated with the interaction; a processor in communication with the sensor, the processor configured to: determine a mode of operation; control at least one feature of a system based on the mode of operation and the interaction; determine a simulated texture associated with the mode of operation; output a haptic signal associated with the simulated texture; and a haptic output device in communication with the processor and coupled to the touch surface, the haptic output device configured to receive the haptic signal and simulate the texture on the touch surface based in part on the haptic signal.

This illustrative embodiment is mentioned not to limit or define the limits of the present subject matter, but to provide an example to aid understanding thereof. Illustrative embodiments are discussed in the Detailed Description, and further description is provided there. Advantages offered by various embodiments may be further understood by examining this specification and/or by practicing one or more embodiments of the claimed subject matter.

### Brief Description of the Drawings

A full and enabling disclosure is set forth more particularly in the remainder of the specification. The specification makes reference to the following appended figures.
Figure 1A shows an illustrative system for mode or state awareness with programmable surface texture;
Figure 1B shows an external view of one embodiment of the system shown in Figure 1A;
Figure 1C illustrates an external view of another embodiment of the system shown in Figure 1A;
Figures 2A-2B illustrate an example embodiment for mode or state awareness with programmable surface texture;
Figures 3A-3B depict an illustrative system for mode or state awareness with programmable surface texture;
Figure 4 is a flow chart for one embodiment of a method for mode or state awareness with programmable surface texture;
Figure 5 is an illustration of a system for mode or state awareness with programmable surface texture; and
Figure 6 is another illustration of a system for mode or state awareness with programmable surface texture.

### Detailed Description

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used on another embodiment to yield a still further embodiment. Thus, it is intended that this disclosure include modifications and variations as come within the scope of the appended claims and their equivalents.

### Illustrative Example of a Device for Providing Mode or State Awareness with Programmable Surface Texture

One illustrative embodiment of the present disclosure comprises a computing system such as a smartphone, tablet, or portable music device. The computing system can include and/or may be in communication with one or more sensors, such as an accelerometer, as well as sensors (e.g., optical, resistive, or capacitive) for determining a location of a touch relative to a display area corresponding in this example to the screen of the device. As the user interacts with the device, one or more haptic output devices, for example, actuators are used to provide tactile effects. For example, a haptic effect may be output to simulate the presence of a texture on the surface of the device. In one such embodiment, as the user's finger moves across the surface, a vibration, electric field, or other effect may be output to simulate the feeling of a texture on the surface of the device. Similarly, in another embodiment, as the user moves a finger across the device, the perceived coefficient of friction of the screen can be varied (e.g., increased or decreased) based on the position, velocity, and/or acceleration of the finger. Depending on how the friction is varied, the user may perceive a feature in the touch surface that would not otherwise be perceived in the same manner (or at all) if the surface friction were not varied. As a particular example, the friction may be varied so that the user perceives a bump, border, or other obstacle corresponding to an edge of an on-screen button.

One example embodiment of the present disclosure may comprise a tablet comprising a touch screen display configured to display a plurality of icons associated with computer programs (e.g., applications for playing music, sending or receiving email, or browsing the internet). When the user interacts with the icons on the tablet, a processor will execute the program associated with the icon. Furthermore, in such an embodiment, the tablet may comprise an electrostatic actuator configured to simulate a texture on the surface of the touch screen. In such an embodiment, when the touch screen detects user interaction, the processor may output a signal to the actuator to generate the simulated texture. For example, when the user interacts with one of the icons, the processor may output a signal to the electrostatic actuator to cause the electrostatic actuator to output a texture associated with that icon. As the user continues to move his or her finger across the display, the processor may further output different textures associated with other icons or the background of the display. In such an embodiment, the simulated texture may enable users to determine the location of their finger on the display based on the simulated texture. In other embodiments, the texture may be associated with other features of the tablet. For example, in some embodiments, the texture may be associated with operating features of the tablet (e.g., a texture associated with battery level). In other embodiments, the simulated texture may be associated with applications running on the tablet, enabling a user to determine which application is running without looking at the screen of the tablet.

As will be discussed in further detail below, simulating a texture on a surface or varying the coefficient of friction on the surface can be used in any number of ways to provide information to a user. Additionally, the presence of a feature in the touch surface can be simulated using effects in addition to or instead of simulating a texture or varying the coefficient of friction. Similarly, a haptic effect can be output to simulate the feeling of a texture on the surface of the device.

### Illustrative Systems for Providing Mode or State Awareness with Programmable Surface Texture

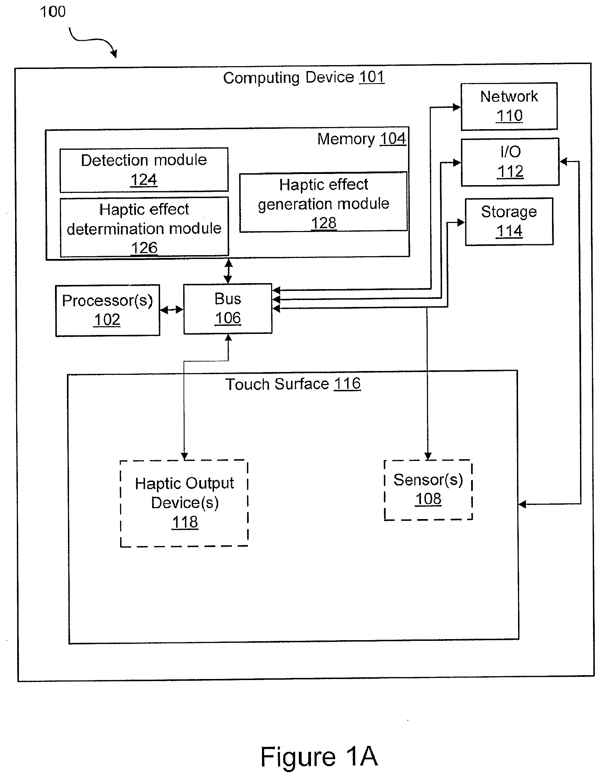

Figure 1A shows an illustrative system 100 for providing a surface-based haptic effect. Particularly, in this example, system 100 comprises a computing device 101 having a processor 102 interfaced with other hardware via bus 106. A memory 104, which can comprise any suitable tangible (and non-transitory) computer-readable medium such as RAM, ROM, EEPROM, or the like, embodies program components that configure operation of the computing device. In this example, computing device 101 further includes one or more network interface devices 110, input/output (I/O) interface components 112, and additional storage 114.

Network device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate connection to devices such as one or more displays, keyboards, mice, speakers, microphones, and/or other hardware used to input data or output data. Storage 114 represents nonvolatile storage such as magnetic, optical, or other storage media included in device 101.

System 100 further includes a touch surface 116, which, in this example, is integrated into device 101. Touch surface 116 represents any surface that is configured to sense touch input of a user. One or more sensors 108 are configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors with a view of the touch surface may be used to determine the touch position. In some embodiments, sensor 108 and touch surface 116 may comprise a touch-screen or a touch-pad. For example, in some embodiments, touch surface 116 and sensor 108 may comprise a touch-screen mounted overtop of a display configured to receive a display signal and output an image to the user. In other embodiments, the sensor 108 may comprise an LED detector. For example, in one embodiment, touch surface 116 may comprise an LED finger detector mounted on the side of a display. In some embodiments, the processor is in communication with a single sensor 108, in other embodiments, the processor is in communication with a plurality of sensors 108, for example, a first touch screen and a second touch screen. The sensor 108 is configured to detect user interaction, and based on the user interaction, transmit signals to processor 102. In some embodiments, sensor 108 may be configured to detect multiple aspects of the user interaction. For example, sensor 108 may detect the speed and pressure of a user interaction, and incorporate this information into the interface signal.

In this example, a haptic output device 118 in communication with processor 102 is coupled to touch surface 116. In some embodiments, haptic output device 118 is configured to output a haptic effect simulating a texture on the touch surface in response to a haptic signal. Additionally or alternatively, haptic output device 118 may provide vibrotactile haptic effects that move the touch surface in a controlled manner. Some haptic effects may utilize an actuator coupled to a housing of the device, and some haptic effects may use multiple actuators in sequence and/or in concert. For example, in some embodiments, a surface texture may be simulated by vibrating the surface at different frequencies. In such an embodiment haptic output device 118 may comprise one or more of, for example, a piezoelectric actuator, an electric motor, an electro-magnetic actuator, a voice coil, a shape memory alloy, an electro-active polymer, a solenoid, an eccentric rotating mass motor (ERM), or a linear resonant actuator (LRA). In some embodiments, haptic output device 118 may comprise a plurality of actuators, for example an ERM and an LRA.

Although a single haptic output device 118 is shown here, embodiments may use multiple haptic output devices of the same or different type to simulate surface textures on the touch surface. For example, in one embodiment, a piezoelectric actuator may be used to displace some or all of touch surface 116 vertically and/or horizontally at ultrasonic frequencies, such as by using an actuator moving at frequencies greater than 20 - 25 kHz in some embodiments. In some embodiments, multiple actuators such as eccentric rotating mass motors and linear resonant actuators can be used alone or in concert to provide different textures and other haptic effects.

In still other embodiments, haptic output device 118 may use electrostatic attraction, for example by use of an electrostatic surface actuator, to simulate a texture on the surface of touch surface 116. Similarly, in some embodiments haptic output device 118 may use electrostatic attraction to vary the friction the user feels on the surface of touch surface 116. For example, in one embodiment, haptic output device 118 may comprise an electrostatic display or any other device that applies voltages and currents instead of mechanical motion to generate a haptic effect. In such an embodiment, an electrostatic actuator may comprise a conducting layer and an insulating layer. In such an embodiment, the conducting layer may be any semiconductor or other conductive material, such as copper, aluminum, gold, or silver. And the insulating layer may be glass, plastic, polymer, or any other insulating material. Furthermore, the processor 102 may operate the electrostatic actuator by applying an electric signal to the conducting layer. The electric signal may be an AC signal that, in some embodiments, capacitively couples the conducting layer with an object near or touching touch surface 116. In some embodiments, the AC signal may be generated by a high-voltage amplifier. In other embodiments the capacitive coupling may simulate a friction coefficient or texture on the surface of the touch surface 116. For example, in one embodiment, the surface of touch surface 116 may be smooth, but the capacitive coupling may produce an attractive force between an object near the surface of touch surface 116. In some embodiments, varying the levels of attraction between the object and the conducting layer can vary the simulated texture on an object moving across the surface of touch surface 116 or vary the coefficient of friction felt as the object moves across the surface of touch surface 116. Furthermore, in some embodiments, an electrostatic actuator may be used in conjunction with traditional actuators to vary the simulated texture on the surface of touch surface 116. For example, the actuators may vibrate to simulate a change in the texture of the surface of touch surface 116, while at the same time; an electrostatic actuator may simulate a different texture, or other effects, on the surface of touch surface 116.

One of ordinary skill in the art will recognize that, in addition to varying the coefficient of friction, other techniques or methods can be used to simulate a texture on a surface. For example, in some embodiments, a texture may be simulated or output using a flexible surface layer configured to vary its texture based upon contact from a surface reconfigurable haptic substrate (including, but not limited to, e.g., fibers, nanotubes, electroactive polymers, piezoelectric elements, or shape memory allows) or a magnetorheological fluid. In another embodiment, surface texture may be varied by raising or lowering one or more surface features, for example, with a deforming mechanism, air or fluid pockets, local deformation of materials, resonant mechanical elements, piezoelectric materials, micro-electromechanical systems ("MEMS") elements, thermal fluid pockets, MEMS pumps, variable porosity membranes, or laminar flow modulation.

In some embodiments, an electrostatic actuator may be used to generate a haptic effect by stimulating parts of the body near or in contact with the touch surface 116. For example, in some embodiments, an electrostatic actuator may stimulate the nerve endings in the skin of a user's finger or components in a stylus that can respond to the electrostatic actuator. The nerve endings in the skin, for example, may be stimulated and sense the electrostatic actuator (e.g., the capacitive coupling) as a vibration or some more specific sensation. For example, in one embodiment, a conducting layer of an electrostatic actuator may receive an AC voltage signal that couples with conductive parts of a user's finger. As the user touches the touch surface 116 and moves his or her finger on the touch surface, the user may sense a texture of prickliness, graininess, bumpiness, roughness, stickiness, or some other texture.

Turning to memory 104, exemplary program components 124, 126, and 128 are depicted to illustrate how a device can be configured in some embodiments to provide mode or state awareness with programmable surface texture. In this example, a detection module 124 configures processor 102 to monitor touch surface 116 via sensor 108 to determine a position of a touch. For example, module 124 may sample sensor 108 in order to track the presence or absence of a touch and, if a touch is present, to track one or more of the location, path, velocity, acceleration, pressure, and/or other characteristics of the touch over time.

Haptic effect determination module 126 represents a program component that analyzes data regarding touch characteristics to select a haptic effect to generate. Particularly, module 126 comprises code that determines, based on the location of the touch, a simulated feature to generate on the touch surface. Module 126 may further comprise code that selects one or more haptic effects to provide in order to simulate the feature. For example, some or all of the area of touch surface 116 may be mapped to a graphical user interface. Different haptic effects may be selected based on the location of a touch in order to simulate the presence of the feature by simulating a texture on a surface of touch surface 116 so that the feature is felt when a corresponding representation of the feature is seen in the interface. However, haptic effects may be provided via touch surface 116 even if a corresponding element is not displayed in the interface (e.g., a haptic effect may be provided if a boundary in the interface is crossed, even if the boundary is not displayed).

Haptic effect generation module 128 represents programming that causes processor 102 to generate and transmit a haptic signal to haptic output device 118, which causes haptic output device 118 to generate the selected haptic effect. For example, generation module 128 may access stored waveforms or commands to send to haptic output device 118. As another example, haptic effect generation module 128 may receive a desired type of texture and utilize signal processing algorithms to generate an appropriate signal to send to haptic output device 118. As a further example, a desired texture may be indicated along with target coordinates for the texture and an appropriate waveform sent to one or more actuators to generate appropriate displacement of the surface (and/or other device components) to provide the texture. Some embodiments may utilize multiple haptic output devices in concert to simulate a feature. For instance, a variation in texture may be used to simulate crossing a boundary between a button on an interface while a vibrotactile effect simulates the response when the button is pressed.

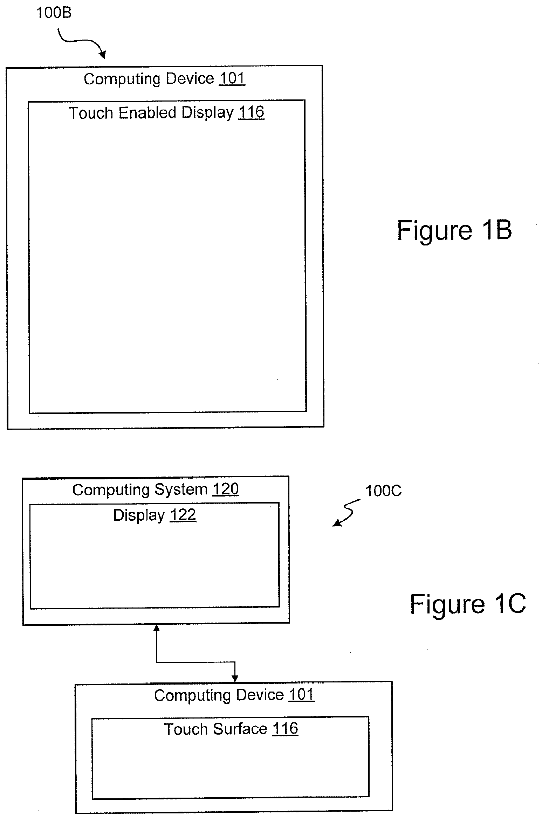

A touch surface may or may not overlay (or otherwise correspond to) a display, depending on the particular configuration of a computing system. In Figure 1B, an external view of a computing system 100B is shown. Computing device 101 includes a touch enabled display 116 that combines a touch surface and a display of the device. The touch surface may correspond to the display exterior or one or more layers of material above the actual display components.

Figure 1C illustrates another example of a touch enabled computing system 100C in which the touch surface does not overlay a display. In this example, a computing device 101 features a touch surface 116 which may be mapped to a graphical user interface provided in a display 122 that is included in computing system 120 interfaced to device 101. For example, computing device 101 may comprise a mouse, trackpad, or other device, while computing system 120 may comprise a desktop or laptop computer, set-top box (e.g., DVD player, DVR, cable television box), or another computing system. As another example, touch surface 116 and display 122 may be disposed in the same device, such as a touch enabled trackpad in a laptop computer featuring display 122. Whether integrated with a display or otherwise, the depiction of planar touch surfaces in the examples herein is not meant to be limiting. Other embodiments include curved or irregular touch enabled surfaces that are further configured to provide surface-based haptic effects.

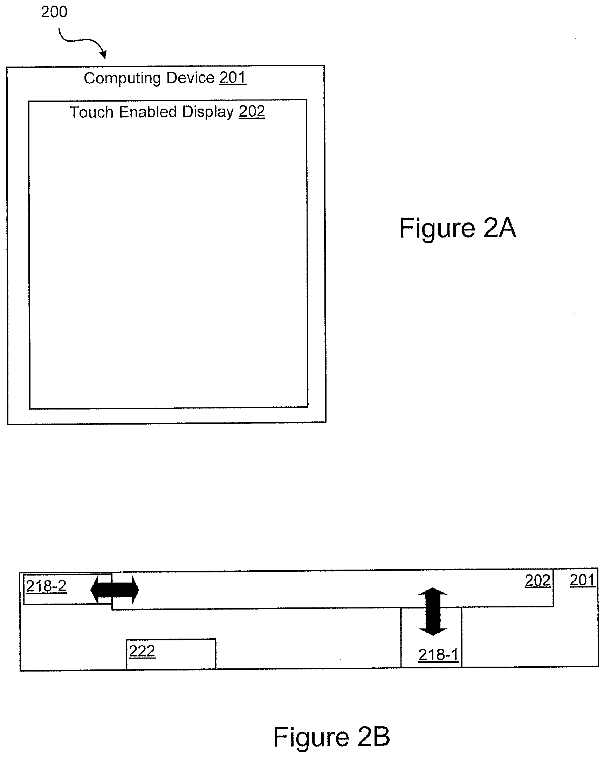

Figures 2A-2B illustrate an example of mode or state awareness with programmable surface texture. Figure 2A is a diagram illustrating an external view of a system 200 comprising a computing device 201 that features a touch enabled display 202. Figure 2B shows a cross-sectional view of device 201. Device 201 may be configured similarly to device 101 of Figure 1A, though components such as the processor, memory, sensors, and the like are not shown in this view for purposes of clarity.

As can be seen in Figure 2B, device 201 features a plurality of haptic output devices 218 and an additional haptic output device 222. Haptic output device 218-1 may comprise an actuator configured to impart vertical force to display 202, while 218-2 may move display 202 laterally. In this example, the haptic output devices 218, 222 are coupled directly to the display, but it should be understood that the haptic output devices 218, 222 could be coupled to another touch surface, such as a layer of material on top of display 202. Furthermore it should be understood that one or more of haptic output devices 218 or 222 may comprise an electrostatic actuator, as discussed above. Furthermore, haptic output device 222 may be coupled to a housing containing the components of device 201. In the examples of Figures 2A-2B, the area of display 202 corresponds to the touch area, though the principles could be applied to a touch surface completely separate from the display.

In one embodiment, haptic output devices 218 each comprise a piezoelectric actuator, while additional haptic output device 222 comprises an eccentric rotating mass motor, a linear resonant actuator, or another piezoelectric actuator. Haptic output device 222 can be configured to provide a vibrotactile haptic effect in response to a haptic signal from the processor. The vibrotactile haptic effect can be utilized in conjunction with surface-based haptic effects and/or for other purposes. For example, each actuator may be used in conjunction to simulate a texture on the surface of display 202.

In some embodiments, either or both haptic output devices 218-1 and 218-2 can comprise an actuator other than a piezoelectric actuator. Any of the actuators can comprise a piezoelectric actuator, an electromagnetic actuator, an electroactive polymer, a shape memory alloy, a flexible composite piezo actuator (e.g., an actuator comprising a flexible material), electrostatic, and/or magnetostrictive actuators, for example. Additionally, haptic output device 222 is shown, although multiple other haptic output devices can be coupled to the housing of device 201 and/or haptic output devices 222 may be coupled elsewhere. Device 201 may feature multiple haptic output devices 218-1 / 218-2 coupled to the touch surface at different locations, as well.

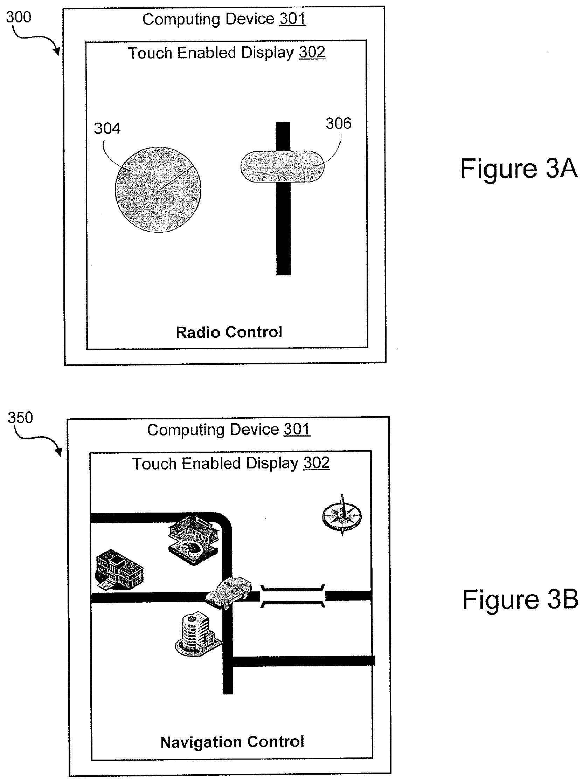

Turning to Figure 3A, system 300 is an illustrative example of mode or state awareness with programmable surface texture. Figure 3A is a diagram illustrating an external view of a system 300 comprising a computing device 301 that features a touch enabled display 302. In one embodiment, computing device 301 may comprise a multifunction controller. For example, a controller for use in a kiosk, ATM, or other computing device. Further, in one embodiment, computing device 301 may comprise a controller for use in a vehicle. In such an embodiment, the multifunction controller may comprise multiple modes. For example, as shown in Figure 3A, touch enabled display 302 shows Radio Controls 304 and 306. In such an embodiment, computing device 302 may be configured to control the radio of a vehicle. For example, controller 304 may comprise an image of a knob configured to control settings on a radio, i.e., a knob to tune the radio station, select a new song, or adjust the volume of the radio. Similarly, controller 306 may comprise an image of a slider configured to adjust another feature of the radio.

In the embodiment described above, the user may be a driver who does not want to take his or her eyes off the road in order to adjust radio settings. In such an embodiment, computing device 301 may implement a haptic effect to identify the current mode. For example, in one embodiment, device 301 may use a haptic output device to simulate a texture on the surface of touch enabled display 302. For example, the haptic output device may output a haptic effect configured to simulate the texture of, for example, gravel, sand, sandpaper, felt, leather, metal, ice, water, grass, or another object. Based on this texture, the user may be able to determine what mode the computing device 301 is currently controlling. For example, in one embodiment, the user may know that one texture, e.g., the texture of gravel, is associated with radio controls. In such an embodiment, when the user feels the texture of gravel on the surface of touch enabled display, the user knows that computing device 301 is currently controlling the volume of the radio, without having to look at the controls. In a further embodiment, the user may be able to assign a texture to various modes that computing device may control. Thus, for example, the user may be able to select a particular texture to be associated with each mode of the device.

Further, in some embodiments, the device may be configured to output haptic effects when the user is touching empty space between or surrounding controls in the interface. For example, in one embodiment, a touch screen configured to control operations in a vehicle may display an entertainment user interface. In such an embodiment, the entire touch screen may comprise an effect associated with the entertainment user interface. Further, in such an embodiment, additional features in the entertainment user interface, such as knobs, sliders, buttons, or other controls may further comprise a distinctive effect layered on top of the other effect. For example, the user may feel a background texture when the user touches an area of the display not associated with one of these controls, but as the user moves his or her finger to the control, the user may further feel a distinctive effect associated with this control. Similarly, in such an embodiment, when the touch screen displays a navigation user interface, the device may output a different background haptic effect (e.g., a texture or a friction) across the whole surface, and further distinctive haptic effects associated with controls 304 and 306.

In a further embodiment, the device may further output another haptic effect when the user touches or moves each of controls 304 and 306. For example, in one embodiment, when the user touches knob 304 the user may feel a certain haptic effect configured to let the user know that he or she is touching knob 304. For example, in one embodiment, knob 304 may have a texture that differs from the texture of the background on touch-enable display 302. Thus, the user may run his or her finger over touch enabled display, and know by the change in texture when the user is touching knob 304. In still another embodiment, computing device 301 may output a different texture as the user adjusts knob 304. For example, in one embodiment, knob 304 may control the volume of the radio. In such an embodiment, computing device 301 may adjust the simulated texture on the surface of touch enabled display 302 as the user adjusts the volume. Thus, for example, as the user increases the volume the texture the user feels on the surface of touch enabled display may become coarser. Such a haptic effect may serve as a confirmation that the computing device 301 has received the user input.

In further embodiments, in addition to the texture based effects discussed above, computing device 301 may be configured to output other haptic effects. For example, in one embodiment, computing device 301 may further comprise actuators such as piezoelectric actuators or rotary motors. In such an embodiment, device 301 may output other haptic effects configured to simulate other features on touch enabled display 302. For example, in one embodiment, computing device 301 may comprise an actuator configured to output an effect configured to simulate virtual detent as the user rotates knob 304. In another embodiment, computing device 301 may comprise an actuator configured to output a vibration as the user moves slider 306. In still other embodiments, other actuators may generate haptic effects configured to simulate other features, such as borders, on the surface of touch enabled display 302. In still other embodiments, actuators may be configured to output vibrations and other effects the user feels through the housing of computing device 301.

Turning to figure 3B, system 350 is another embodiment of the computing device 301 described above with regard to figure 3A. In the embodiment shown in figure 3B, computing device 301 is configured to control a navigation system. In the embodiment shown in figure 3B, touch enabled display 302 may output a haptic effect different than the haptic effect discussed above. This haptic effect may serve as a confirmation that the computing device 301 is in a navigation control mode. In one embodiment, the computing device 301 may be configured to output a different texture on the surface of touch enabled display 302 when the navigation system has received a route from the user. In such an embodiment, this texture may serve as a confirmation that the navigation system has performed an operation. For example, one texture may serve as confirmation that the user has entered an address, while another texture may serve as a confirmation that the navigation system has determined the user's present location, and still another texture may serve as confirmation that the user has arrived at a destination.

In another embodiment, touch enabled display 302 may display a user interface configured to control one or more operations. In one embodiment, this user interface may comprise a navigation user interface. In such an embodiment, the navigation user interface may comprise a plurality of modes, for example, one mode where the user is browsing the map freely, another one where the user interface is displaying a route and is in the process of leading the user to a destination, and another when the route is being calculated or recalculated. In such an embodiment, when the user interacts with the user interface, the device outputs a different haptic effect depending on which of these modes the user interface is currently in.

Further, in some embodiments, the user interface may comprise additional sub-modes. For example, in the embodiment discussed above, when the navigation user interface is in a route mode, the device may output a haptic effect that is further refined based on whether there is traffic on the route. For example, in one embodiment, the haptic effect may be associated with one texture for light traffic, and a different texture for heavy traffic. In such an embodiment, the user may be able to quickly determine whether there is traffic, and how much traffic, based on the haptic effect.

### Illustrative Methods for Providing Mode or State Awareness with Programmable Surface Texture

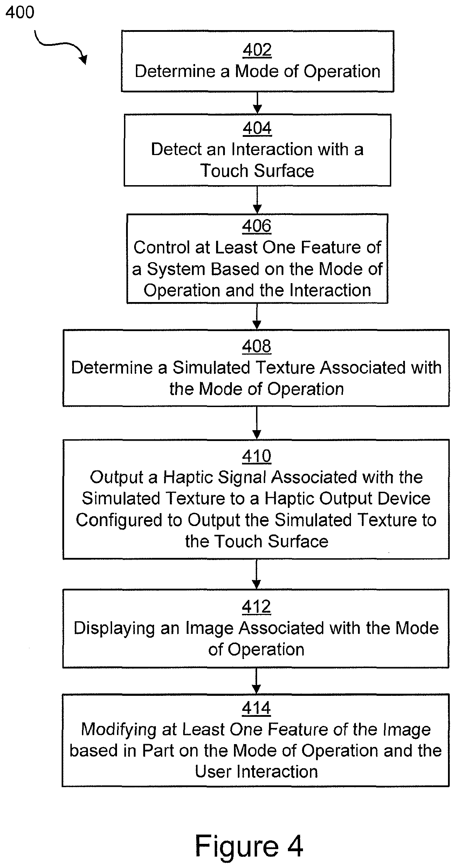

Figure 4 is a flowchart showing an illustrative method 400 for providing mode or state awareness with programmable surface texture. In some embodiments, the steps in Figure 4 may be implemented in program code that is executed by a processor, for example, the processor in a general purpose computer, a mobile device, or server. In some embodiments, these stages may be implemented by a group of processors. The steps below are described with reference to components described above with regard to system 100 shown in Figure 1.

The method 400 begins when a processor 102 determines a mode of operation 402. In some embodiments, the mode of operation may be a specific mode of computing device 101. For example, in one embodiment, computing device 101 may comprise a multifunction controller in a vehicle. In such an embodiment, the multifunction controller may be configured to control a plurality of different modes, for example, a navigation mode, a climate control mode, an entertainment mode, a radio mode, a text message mode, an email mode, or a system control mode. In each of these modes computing device 101 may be configured to control external devices. For example, in some embodiments, in a climate control mode computing device 101 is configured to control a climate control system. Similarly, in an entertainment mode computing device 101 may be configured to control a video entertainment system. Similarly, in music player mode computing device 101 may be configured to control a music player, radio, or speaker system. In some embodiments, computing device 101 may be configured to receive signals from the device it controls, and output haptic effects, such as simulated textures, based on the state of that device. For example, in one embodiment, computing device 101 may be configured to control a climate control system, and output a texture associated with the climate control system having already been turned on, or another texture associated with the climate control system having been turned off.

In controlling each of these modes, computing device 101 may be configured to control various features associated with each mode. In still other embodiments, computing device 101 may comprise a different type of system, for example, a mobile device, a thermostat, a clock, or a control system for another device. In each of these embodiments, computing device 101 may comprise a plurality of modes, which each comprise a plurality of features that may be controlled by computing device 101.

The method 400 continues when sensor 108 detects an interaction with a touch surface 404. Sensor 108 may comprise one or more of a plurality of sensors known in the art, for example, resistive and/or capacitive sensors may be embedded in touch surface 116 and used to determine the location of a touch and other information, such as pressure. As another example, optical sensors with a view of the touch surface may be used to determine the touch position. In still other embodiments, sensors 108 and touch surface 116 may comprise a touch screen display.

The method 400 continues when processor 102 controls at least one feature of a system based on the mode of operation and the interaction 406. For example, as discussed above, computing device 101 may be configured to control a plurality of modes. In some embodiments, each of the plurality of modes comprises a plurality of features, which are also controlled by computing device 102. For example, in a navigation mode, computing device 101 may be configured to control the destination of a navigation system. For example, when in the navigation mode, the user may interact with touch surface 116 to enter navigation data, or modify settings associated with the navigation mode. In such an embodiment, a user may further be able to change the mode to another mode. For example, in such an embodiment, the user may change to another mode such as a climate control mode, in which computing device 101 may be configured to control various features of the climate control system, for example, the temperature, fan speed, vents, or other features. Further, in such an embodiment, the user may change to yet another mode, for example, an entertainment mode. In an entertainment mode, the computing device 101 may be configured to control other features, such as whether to start, stop, or pause a video, music selection, or other features.

The method 400 continues when processor 102 determines a simulated texture associated with the mode of operation 408. The processor may rely on programming contained in haptic effect determination module 126 to determine the simulated texture. For example, the processor 102 may access drive signals stored in memory 104 and associated with particular haptic effects. As another example, a signal may be generated by accessing a stored algorithm and inputting parameters associated with an effect. For example, an algorithm may output data for use in generating a drive signal based on amplitude and frequency parameters. As another example, a haptic signal may comprise data sent to an actuator to be decoded by the actuator. For instance, the actuator may itself respond to commands specifying parameters such as amplitude and frequency. The simulated texture may be one of a plurality of available textures. For example, the plurality of textures may comprise one or more of the textures of: water, grass, ice, metal, sand, gravel, brick, fur, leather, skin, fabric, rubber, leaves, or any other available texture. In some embodiments, the simulated texture may be associated with the mode, or features within the mode. For example, in one embodiment, a specific texture may be associated with a music player mode. In such an embodiment, the texture of sand may be associated with a music player mode. Further, in such an embodiment, different types of music may each comprise separate textures. For example, when a blue grass song is played, the texture may comprise a texture associated with grass and when heavy metal is played, the texture may comprise the texture of metal.

In some embodiments, the texture, or other haptic effect may be selected in order to introduce variety in the feel of touch interfaces. In some embodiments, this variety may make the touch interfaces more exciting and fun to use. For example, some touch interfaces may tend to comprise a glass or plastic feel. Over time this tactile sameness may make interfaces boring to use. In some embodiments, a haptic texture according to the present disclosure may be selected to solve this problem by providing a unique, and changing, feel to the touch surface.

Further, in some embodiments, users may be able to select a texture or other haptic effect in order to customize a mobile device. In some embodiments, users may enjoy customizing mobile devices. For example, some users enjoy customizing their mobile device with selected ringtones, wall papers and other audio-visual elements. In some embodiments, users may select a haptic effect such as a surface texture to allow for personalization of the feel of a touch interface. In some embodiments, the user may select these personalized haptic effects or surface textures through modifying settings or downloading software associated with particular effects. In other embodiments, the user may designate effects through detected interaction with the device. In some embodiments, this personalization of haptic effects may increase the user's sense of ownership and the connection between the user and his or her device.

In still other embodiments, device manufacturers or software developers may select distinctive haptic effects, such as surface textures, to brand their devices or user interfaces. In some embodiments, these haptic effects may be unique to branded devices similarly to other distinctive elements that may increase brand awareness. For example, many mobile devices and tablets may comprise a custom or branded home screen environment. For example, in some embodiments, devices produced by different manufacturers may still comprise the same operating system; however, manufacturers may distinguish their devices by modifying this home screen environment. Thus, in some embodiments, some device manufacturers or software developers may use haptic effects such as textures either in home screens or in other user interfaces to create a unique and differentiated user experience.

The method 400 continues when processor 102 outputs a haptic signal associated with the simulated texture to a haptic output device 118 configured to output the simulated texture to the touch surface 410. In some embodiments haptic output device 118 may comprise traditional actuators such as piezoelectric actuators or electric motors coupled to touch surface 116 or other components within computing device 101. In other embodiments haptic output device 118 may comprise electrostatic actuators configured to simulate textures using electrostatic fields. In some embodiments, processor 102 may control a plurality of haptic output devices to simulate multiple haptic effects. For example, in one embodiment, processor 102 may control an electrostatic actuator to simulate a texture on the surface of touch surface 116 and processor 102 may further control other haptic output devices 118 to simulate other features. For example, haptic output devices 118, may comprise actuators configured to output other effects, such as vibrations configured to simulate barriers, detents, movement, or impacts on touch surface 116. In some embodiments, processor 102 may coordinate the effects so the user can feel a plurality of effects together when interacting with touch surface 116.

The method 400 continues when an I/O component 112 displays an image associated with the mode of operation 412. For example, in some embodiments, I/O components 112 may comprise a display or touch screen display. In such an embodiment, the display may show an image associated with the mode. For example, in one embodiment, the display may comprise an image associated with a radio control mode, such as the embodiment shown in Figure 3A. In such an embodiment, the user may change to a different mode by interacting with touch surface 116. For example, the user may change to a navigation mode. In such an embodiment, the display may then show an image associated with the navigation mode, for example, a map, such as the embodiment shown in Figure 3B.

The method 400 continues when processor 102 modifies at least one feature of the image based in part on the mode of operation and the user interaction 414. For example, in a radio control mode, when the user changes features associated with the radio mode, for example the volume, by interacting with touch surface 116, the display may show an image associated with movement of the volume control knob. In another embodiment, in a climate control mode, when the user adjusts features associated with climate control, for example, the temperature, the display may show a change associated with that feature, for example, a change in the displayed temperature.

### Other Illustrative Embodiments of Mode or State Awareness with Programmable Surface Textures

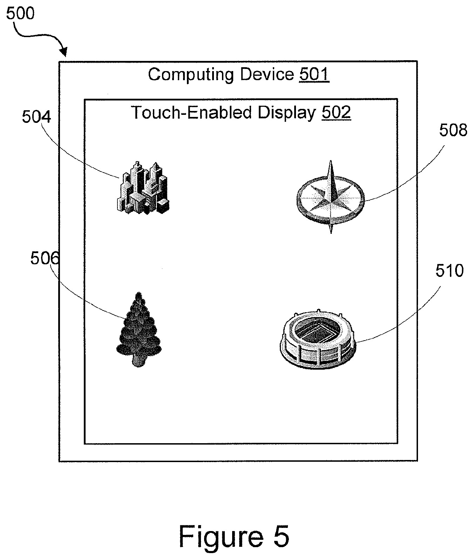

Figure 5 illustrates an example embodiment of mode or state awareness with programmable surface texture. Figure 5 is a diagram illustrating an external view of a system 500 comprising a computing device 501 that comprises a touch enabled display 502. In some embodiments, computing device 501 may comprise a handheld device, such as a smartphone, tablet, pocket organizer, GPS receiver, or other handheld device known in the art.

As can be seen in Figure 5, computing device 501 includes a touch enabled display 502. As shown in Figure 5, touch enabled display 502 shows a plurality of icons 504, 506, 508, and 510. In other embodiments, the display may show more, fewer, or different icons. In some embodiments, each of the plurality of icons is associated with one or more computer programs, for example, programs for text messaging, reading news, listening to music, reading a book, watching a video, or accessing the Internet. Thus, in some embodiments, when a user touches one of the plurality of icons 504, 506, 508, and 510, computing device 501 executes a program associated with that icon. In other embodiments, icons 504, 506, 508, and 510 may be associated with a file, for example, a data file, a music file, a video file, or a program file. In still other embodiments, icons 504, 506, 508, and 510 may comprise icons that control settings of computing device 501. For example, in one embodiment each of icons 504, 506, 508, and 510 may comprise simulated buttons or switches.

In some embodiments, computing device 501 is further configured to output haptic effects. For example, in some embodiments, computing device 501 may comprise a haptic output device as discussed above. In such an embodiment computing device 501 may use the haptic output device to simulate various textures on the surface of touch enabled display 502. For example, in some embodiments, each of the plurality of icons 504, 506, 508, and 510 may comprise an associated texture. In such an embodiment, when the user interacts with touch enabled display 502, the location of the user's finger may be tracked by sensors. Based on the location of the user's finger computing device 501 may output a haptic effect configured to simulate a texture on the surface of touch enabled display 502. In some embodiments, computing device 501 may output the same simulated texture when the user touches each of icons 504, 506, 508, and 510. In other embodiments, each of icons 504, 506, 508, and 510 may comprise its own unique texture. In such an embodiment, computing device 501 may comprise a setting that allows the user to select a texture and assign it to a specific icon. In still other embodiments, computing device 501 may be configured to output still another simulated texture when the user interacts with the background of touch enabled display 502. In still other embodiments, computing device 501 may be configured to simulate a texture on the surface of touch enabled display 502 to let the user know that a specific icon has been pressed, and that a program associated with the selected icon is running.

In some embodiments, the simulated texture may be configured to identify each icon haptically. For example, in one embodiment, computing device 501 may be a smartphone. In such an embodiment, when computing device 501 is in the user's pocket, the user may identify specific icons based on their texture. Further, in some embodiments, computing device 501 may be configured to simulate textures as notices of device settings. For example, in one embodiment, computing device 501 may output one or more textures to alert the user to the level of charge in the battery. In other embodiments, computing device 501 may be configured to output one or more textures to alert the user that a text message has been received, that an alarm has been set, that a call has been placed or is incoming, that an email has been received, that a specific program is running, that the user has an appointment on his or her calendar, or some other characteristic associated with the computing device 501. In still other embodiments, a simulated texture may identify a status associated with icons 504, 506, 508, and 510. For example, each of icons 504, 506, 508, and 510 may comprise a button or a switch, and a surface texture may be used to identify the state (i.e. off or on) of that button, switch, or configuration setting.

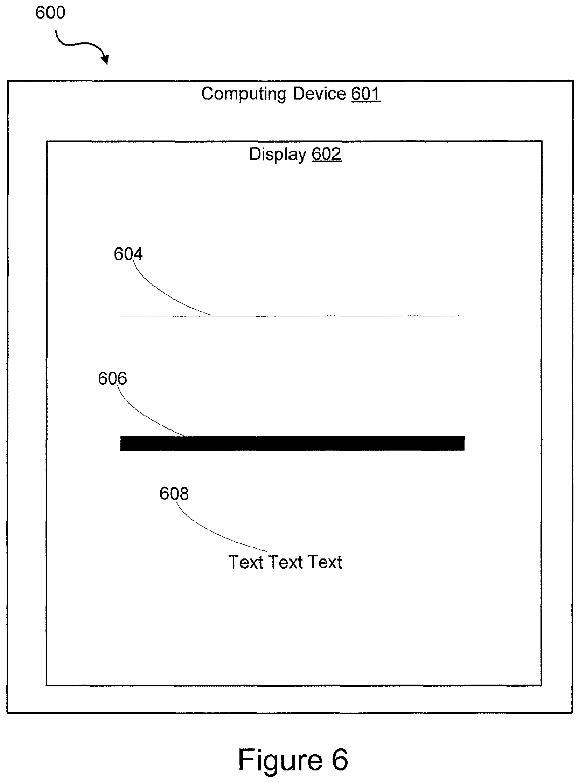

Figure 6 illustrates an example embodiment of mode or state awareness with programmable surface texture. Figure 6 is a diagram illustrating an external view of a system 600 comprising a computing device 601 that features a display 602. In some embodiments, display 602 may comprise a touch enabled display. Further in some embodiments, computing device 601 may comprise a laptop, desktop, or tablet computer. In other embodiments, computing device 601 may comprise a handheld device, such as a smartphone, tablet, pocket organizer, GPS receiver, smart watch, wristband, anklet, head-mounted devices, or other handheld and/or wearable device known in the art.

In the embodiment shown in Figure 6, computing device 601 is configured execute drawing software, for example, Computer Aided Drawing Software, presentation software, or other drawing software known in the art. As shown in Figure 6, display 602 shows a thin line 604, a thick line 606, and text 608. In other embodiments, other features, such as other lines, shapes, text blocks, pictures, files, or other items known in the art could be present.

Computing device 601 is configured to simulate various textures when the user interacts with features of display 602. As mentioned above, in some embodiments, display 602 may comprise a touch screen display. In such an embodiment, the user may interact with the items shown in display 602, by touching the surface of the display. When the user touches the surface of display 602, computing device 601 may be configured to simulate a texture on the surface of display 602. This texture may serve to identify one object from another. For example, text 608 may comprise a different texture than lines 604 and 606. Further, in some embodiments, lines of different widths or sizes may comprise different textures. In some embodiments, computing device 601 may be configured to output the simulated texture when the user is drawing an object. Such an embodiment may allow the user to determine properties of the drawing based on feel alone. For example, in some embodiments, computing device 601 may output one texture when the user is dragging an object, and output a different texture when the user is moving the cursor alone. In such an embodiment, computing device 601 may be configured to output still another texture to act as confirmation that the user has completed the movement.

In some embodiments, the user may feel the simulated texture through a different type of user interface device. For example, the user may feel a simulated texture in a mouse, touchpad, rollerball, or joystick. For example, in one embodiment, computing device 601 may be configured to control braking mechanisms that slow the progress of a mouse or trackball, and thereby simulate a texture when the user is interacting with an object.

### Advantages of Mode or State Awareness with Programmable Surface Texture

There are numerous advantages of mode or state awareness with programmable surface texture. Mode or state awareness with programmable surface texture may allow the user to make a state determination (i.e. determine the mode a device is in) without having to look at the device. Thus, the user may be able to maintain focus on other tasks. For example, in an embodiment where mode or state awareness with programmable surface texture is used in a user interface for a vehicle, the user may be able to change between various modes (i.e., climate control, navigation, radio) without having to look at the interface. This may help the user to drive more safely. In other embodiments, the user may be able to make similar determinations with regard to a mobile device, and therefore not have to visually focus on the mobile device in order to control its functions. Further, other embodiments of mode or state awareness with programmable surface texture provide additional benefits by acting as confirmation that an action has been performed.

In other embodiments, mode or state awareness with programmable surface texture may enable a user to use software and user interfaces more effectively. For example, a user may be able to use drawing software that takes advantage of mode or state awareness with programmable surface texture to determine whether the program is in a mode in which objects snap to a grid, or a mode in which objects can be placed at any position in the document, without having to visually focus on a display or by having a more intuitive tactile interaction with the drawing program. Similarly, a user may be able to use mode or state awareness with programmable surface texture in word processing software to make determinations about a document, without having to visually focus on the document. For example, a computing device implementing mode or state awareness with programmable surface texture may output a texture associated with typographical errors, number of words, line spacing, or some other feature so the user can make this determination about a document without having to visually review the entire document.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.
The following features 1-19 also form a part of the present disclosure:
1. A system comprising:
   a sensor configured to detect an interaction with a touch surface and transmit a sensor signal associated with the interaction;
   a processor in communication with the sensor, the processor configured to:
      determine a mode of operation;
      control at least one feature of a system based on the mode of operation and the interaction;
      determine a simulated texture associated with the mode of operation;
      output a haptic signal associated with the simulated texture; and
   a haptic output device in communication with the processor and coupled to the touch surface, the haptic output device configured to receive the haptic signal and simulate the texture on the touch surface.
2. The system of feature 1, wherein the haptic output device comprises an actuator configured to output a vibration at an ultrasonic frequency.
3. The system of feature 2, wherein the vibration is greater than or equal to 25,000 Hz.
4. The system of feature 1, wherein the haptic output device comprises a device configured to generate an electrostatic field.
5. The system of feature 1, further comprising a network interface in communication with the processor.
6. The system of feature 5, wherein the network interface comprises a wireless network interface.
7. The system of feature 5, wherein determining the mode of operation comprises receiving data from the network.
8. The system of feature 7, wherein the data comprises a message sent from a remote source.
9. The system of feature 1, further comprising a display configured to receive a display signal and display an image associated with the display signal and wherein the processor is configured to modify at least one feature of the display signal based in part on the mode of operation and the user interaction.
10. The system of feature 2, wherein the display comprises the sensor.
11. The system of feature 10, wherein the display comprises a touch-screen display.
12. The system of feature 1, wherein the mode of operation comprises one of: a navigation mode, a climate control mode, an entertainment, a music player mode, a text message mode, an email mode, or a system control mode.
13. The system of feature 1, wherein the feature of the system comprises a feature associated with: temperature, volume, song selection, radio station, battery level, text message receipt, text message writing, email receipt, or email writing.
14. A method comprising:
   determining a mode of operation;
   detecting an interaction with a touch surface;
   controlling at least one feature of a system based on the mode of operation and the interaction;
   determining a simulated texture associated with the mode of operation; and
   outputting a haptic signal associated with the simulated texture to a haptic output device configured to output the simulated texture to the touch surface.
15. The method of feature 14, further comprising displaying an image associated with the mode of operation.
16. The method of feature 14, further comprising modifying at least one feature of the image based in part on the mode of operation and the user interaction.
17. The method of feature 14, wherein determining the mode of operation is associated with data received from a network.
18. The method of feature 17, wherein the data comprises a message received from a remote source.
19. A non-transient computer readable medium comprising program code, which when executed by a processor is configured to cause the processor to:
   determine a mode of operation;
   detect an interaction with a touch surface;
   control at least one feature of a system based on the mode of operation and the interaction;
   determine a simulated texture associated with the mode of operation; and
   output a haptic signal associated with the simulated texture to a haptic output device configured to output the simulated texture to the touch surface.

## Claims

1. A system (100, 100B, 100C, 200, 300, 350, 500, 600) for providing mode or state awareness with programmable surface texture comprising:
a processor (102) configured to:
receive a sensor signal associated with user interaction with a touch surface (116, 202, 302, 502, 602);
determine a control (304, 306, 504, 508, 506, 510) at a location in a graphical user interface associated with the user interaction with the touch surface (116, 202, 302, 502, 602);
determine one of a plurality of modes of operation associated with the control (304, 306, 504, 508, 506, 510), wherein each of the plurality of modes of operation comprises a plurality of features to be controlled;
control at least one feature of the plurality of features based on the mode of operation and the interaction;
determine a first simulated texture associated with the mode of operation; and
output a haptic signal to a haptic output device (118) coupled to the touch surface (116, 202, 302, 502, 602) and configured to receive the haptic signal and simulate a texture on the touch surface.

2. The system (100, 100B, 100C, 200, 300, 350, 500, 600) of claim 1, wherein the control (304, 306, 504, 508, 506, 510) comprises one of a button or a switch, and wherein the first simulated texture simulates a response when the button or switch is pressed.

3. The system (100, 100B, 100C, 200, 300, 350, 500, 600) of claim 1 or 2, wherein the processor (102) is further configured to determine a second simulated texture associated with an area of the graphical user interface outside of the control (304, 306, 504, 508, 506, 510), wherein the second simulated texture is different than the first simulated texture.

4. The system (100, 100B, 100C, 200, 300, 350, 500, 600) of claim 3, wherein the processor (102) is configured to receive a second sensor signal associated with user interaction associated with an area of the graphical user interface outside of the control (304, 306, 504, 508, 506, 510) and output the second simulated texture.

5. The system (100, 100B, 100C, 200, 300, 350, 500, 600) of claim 1, wherein determining the mode of operation comprises receiving data from a network interface (110).

6. The system (100, 100B, 100C, 200, 300, 350, 500, 600) of claim 1, wherein the mode of operation comprises one of: a navigation mode, a climate control mode, an entertainment, a music player mode, a text message mode, an email mode, or a system control mode.

7. The system (100, 100B, 100C, 200, 300, 350, 500, 600) of claim 1, wherein the feature of the system comprises a feature associated with: temperature, volume, song selection, radio station, battery level, text message receipt, text message writing, email receipt, or email writing.

8. A method for providing mode or state awareness with programmable surface texture comprising:
receiving a sensor signal associated with user interaction with a touch surface (116, 202, 302, 502, 602);
determining a control (304, 306, 504, 508, 506, 510) at a location in a graphical user interface associated with the user interaction with the touch surface;
determining one of a plurality of modes of operation associated with the control (304, 306, 504, 508, 506, 510), wherein each of the plurality of modes of operation comprises a plurality of features to be controlled;
controlling at least one feature of the plurality of features based on the mode of operation and the interaction;
determining a first simulated texture associated with the mode of operation; and
outputting a haptic signal to a haptic output device (118) coupled to the touch surface (116, 202, 302, 502, 602) and configured to receive the haptic signal and simulate a texture on the touch surface.

9. The method of claim 8, wherein the control (304, 306, 504, 508, 506, 510) comprises one of a button or a switch, and wherein the first simulated texture simulates a response when the button or switch is pressed.

10. The method of claim 8 or 9, further comprising determining a second simulated texture associated with an area of the graphical user interface outside of the control (304, 306, 504, 508, 506, 510), wherein the second simulated texture is different than the first simulated texture.

11. The method of claim 10, further comprising receiving a second sensor signal associated with user interaction associated with an area of the graphical user interface outside of the control (304, 306, 504, 508, 506, 510) and outputting the second simulated texture.

12. The method of claim 8, wherein determining the mode of operation comprises receiving data from a network interface (110).

13. The method of claim 8, wherein the mode of operation comprises one of: a navigation mode, a climate control mode, an entertainment, a music player mode, a text message mode, an email mode, or a system control mode.

14. The method of claim 8, wherein the feature comprises a feature associated with: temperature, volume, song selection, radio station, battery level, text message receipt, text message writing, email receipt, or email writing.

15. A non-transient computer readable medium comprising program code, which when executed by the processor (102) of a system (100, 100B, 100C, 200, 300, 350, 500, 600) according to claim 1, is configured to cause the processor (102) to carry out the method of claim 8.
